# FASCICULE DE BREVET EUROPEEN

(11) **EP 3 763 321 B1**
(45) Date de publication et mention de la délivrance du brevet: **20.10.2021**
(21) Numéro de dépôt: 19185036.1
(22) Date de dépôt: 08.07.2019
(51) Int. Cl.: A61C 8/00

(54) **IMPLANT DENTAIRE A FILETAGE AMELIORE**
ZAHNIMPLANTAT MIT VERBESSERTEM GEWINDE
DENTAL IMPLANT WITH IMPROVED THREAD

(43) Date de publication de la demande: 13.01.2021
(73) Titulaire: ANTHOGYR, 74700 Sallanches (FR)
(72) Inventeur: RICHARD, Hervé, 73590 NOTRE DAME DE BELLECOMBE (FR)
(74) Mandataire: Cabinet Poncet

(56) Documents cités:
- EP-A1- 1 624 826
- EP-A1- 2 570 096
- WO-A2-2017/129826
- US-A1- 2008 261 175

## Description

### DOMAINE TECHNIQUE DE L'INVENTION

La présente invention concerne le domaine de l'implantologie dentaire, et concerne plus particulièrement un implant dentaire destiné à être inséré dans l'os maxillaire ou mandibulaire d'un patient pour recevoir et porter une prothèse dentaire.

Lors de la mise en place d'un implant dans l'os maxillaire ou mandibulaire d'un patient, il est important d'obtenir une stabilité post-implantation (dite stabilité primaire) la meilleure possible afin de pouvoir mettre en charge ledit implant le plus vite possible, voire immédiatement, c'est-à-dire avant que l'os ait colonisé la surface latérale de l'implant.

La stabilité primaire d'un implant dépend notamment de la densité de l'os dans lequel il est implanté.

Lorsque l'os est de faible densité (classiquement de densité D3 ou D4 selon la classification de Misch), on réalise un trou cylindrique dans l'os maxillaire ou mandibulaire à l'aide d'un foret, trou dans lequel on insère ensuite la partie endoosseuse d'un implant dentaire ayant un volume plus important que le volume du trou ménagé dans l'os. On peut par exemple recourir à un implant dentaire connu comprenant un corps d'implant s'étendant selon un axe longitudinal entre une extrémité coronaire et une extrémité apicale, ledit corps d'implant comportant une âme le long de laquelle s'étend un filetage hélicoïdal à au moins un filet, ledit implant dentaire comportant au moins un tronçon dans lequel le filetage a une hauteur (prise perpendiculairement à l'axe longitudinal) qui diminue progressivement en direction de l'extrémité coronaire et dans lequel l'âme est effilée en direction de l'extrémité apicale, ledit au moins un filet comportant une surface apicale orientée vers l'extrémité apicale de l'implant dentaire, une surface coronaire orientée vers l'extrémité coronaire de l'implant dentaire et une surface latérale périphérique reliant la surface apicale et la surface coronaire dudit au moins un filet. Un tel implant dentaire est par exemple décrit dans le document EP 1 624 826. L'implant dentaire a généralement une extrémité apicale à section transversale sensiblement égale à la section transversale du trou cylindrique. Lors de son insertion, l'implant dentaire compresse progressivement l'os en périphérie du trou ménagé dans l'os, de sorte que la stabilité primaire est augmentée.

Mais lorsqu'un tel implant dentaire est inséré dans un os de plus grande densité (classiquement de densité D1 ou D2 selon la classification de Misch), la densité de l'os rend celui-ci moins aisément compressible, de sorte que la pénétration de l'implant dentaire nécessite un couple de vissage beaucoup plus élevé, et parfois même trop élevé pour être supporté sans dommages par l'implant dentaire (notamment au niveau de sa connectique permettant son vissage par entraînement en rotation).

### EXPOSE DE L'INVENTION

L'invention est telle que définie dans les revendications annexées. Un problème proposé par la présente invention est de fournir un implant dentaire apte à être inséré dans un os de faible densité en compressant l'os pour une bonne stabilité primaire, mais également apte à être inséré dans un os de plus grande densité sans pour autant que le couple d'insertion par vissage devienne trop élevé.

Pour atteindre ces objets ainsi que d'autres, l'invention propose un implant dentaire comprenant un corps d'implant s'étendant selon un axe longitudinal entre une extrémité coronaire et une extrémité apicale, ledit corps d'implant comportant une âme le long de laquelle s'étend un filetage hélicoïdal à au moins un filet, ledit implant dentaire comportant au moins un tronçon dans lequel le filetage a une hauteur qui diminue progressivement en direction de l'extrémité coronaire et dans lequel l'âme est effilée en direction de l'extrémité apicale, ledit au moins un filet comportant une surface apicale orientée vers l'extrémité apicale de l'implant dentaire, une surface coronaire orientée vers l'extrémité coronaire de l'implant dentaire et une surface latérale périphérique reliant la surface apicale et la surface coronaire dudit au moins un filet, dans lequel :
- la surface apicale dudit au moins un filet présente, en coupe selon l'axe longitudinal, un premier profil se répétant selon un pas apical,
- la surface coronaire dudit au moins un filet présente, en coupe selon l'axe longitudinal, un deuxième profil se répétant selon un pas coronaire ;
selon l'invention, dans ledit au moins un tronçon, le pas apical est supérieur au pas coronaire.

Dans l'implant selon l'art antérieur décrit dans le document EP 1 624 826, les pas coronaire et apical sont égaux. Dans le tronçon dans lequel le filetage a une hauteur qui diminue progressivement en direction de l'extrémité coronaire et dans lequel l'âme s'effile en direction de l'extrémité apicale, la largeur de la surface latérale périphérique (prise selon l'axe longitudinal) du filet augmente en direction de l'extrémité coronaire. Il en résulte que, dans ce tronçon, le filetage compresse radialement l'os de façon plus importante à proximité de l'extrémité coronaire qu'à proximité de l'extrémité apicale, ce qui augmente nettement le couple de vissage au fur et à mesure de l'insertion dudit tronçon de l'implant dentaire dans l'os.

Dans l'implant dentaire selon la présente invention, le fait de prévoir, dans le tronçon dans lequel le filetage a une hauteur qui diminue progressivement en direction de l'extrémité coronaire et dans lequel l'âme s'effile en direction de l'extrémité apicale, un filetage avec un pas apical qui est supérieur au pas coronaire procure une moindre augmentation de la largeur de la surface latérale périphérique (prise selon l'axe longitudinal) en direction de l'extrémité coronaire. Le couple d'insertion par vissage s'en trouve ainsi diminué.

Pour faciliter la fabrication de l'implant, dans un premier mode de réalisation, les pas coronaire et apical peuvent avantageusement être constants.

De préférence, on peut choisir des pas apical et coronaire de sorte que le rapport du plus grand sur le plus petit des pas apical et coronaire appartient à l'intervalle ] 1 ; 1,1 ]. On a ainsi obtenu de bons résultats en termes de réduction du couple d'insertion par vissage.

Dans un deuxième mode de réalisation, on peut prévoir que l'un du pas coronaire ou du pas apical est constant tandis que l'autre du pas coronaire ou du pas apical augmente progressivement. On peut ainsi faire varier le pas coronaire ou le pas apical de façon à obtenir, dans le tronçon dans lequel le filetage a une hauteur qui diminue progressivement en direction de l'extrémité coronaire et dans lequel l'âme s'effile en direction de l'extrémité apicale, une largeur de la surface latérale périphérique (prise selon l'axe longitudinal) sensiblement constante.

Pour compresser l'os de façon progressive, on peut avantageusement prévoir que l'âme est effilée selon un forme conique en direction de l'extrémité apicale sur ledit au moins un tronçon de la longueur de l'implant.

Avantageusement, on peut prévoir que, dans ledit au moins un tronçon de la longueur de l'implant dans lequel l'âme est effilée en direction de l'extrémité apicale, le filetage est effilé en direction de l'extrémité apicale, en étant de préférence de forme conique.

De préférence, dans ledit au moins un tronçon de la longueur de l'implant, on peut prévoir que :
- l'âme et le filetage sont coniques,
- l'âme comporte une conicité supérieure à la conicité du filetage.

Selon un autre aspect, la présente invention propose un procédé de fabrication d'un implant dentaire comprenant un corps d'implant s'étendant selon un axe longitudinal entre une extrémité coronaire et une extrémité apicale, ledit corps d'implant comportant une âme le long de laquelle s'étend un filetage hélicoïdal à au moins un filet, caractérisé en ce que :
a) lors d'un premier cycle de filetage, on réalise au moins un filet par un outil à fileter en déplacement relatif longitudinal selon un premier pas de telle sorte que :
   - dans au moins un tronçon de longueur de l'implant dentaire, ledit au moins un filet a une hauteur diminuant progressivement en direction de l'extrémité coronaire et l'âme est effilée en direction de l'extrémité apicale,
   - ledit au moins un filet comporte une surface coronaire orientée sensiblement en direction de l'extrémité coronaire,
   - ledit au moins un filet comporte une surface apicale orientée sensiblement en direction de l'extrémité apicale,
   - ledit au moins un filet comporte une surface latérale périphérique reliant la surface apicale et la surface coronaire,
b) lors d'un deuxième cycle de filetage, dans ledit au moins un tronçon de longueur de l'implant dentaire, on retaille par un outil à fileter en déplacement relatif longitudinal selon un deuxième pas :
   - la surface apicale, le deuxième pas étant plus grand que le premier pas, et/ou
   - la surface coronaire, le deuxième pas étant plus petit que le premier pas.

Un tel procédé permet d'obtenir un implant dentaire dont le couple d'insertion par vissage est moindre par rapport à un implant dentaire dont les premier et deuxième pas sont égaux dans ledit tronçon dans lequel le filetage a une hauteur qui diminue progressivement en direction de l'extrémité coronaire et dans lequel l'âme est effilée en direction de l'extrémité apicale.

Pour faciliter la fabrication, les premier et deuxième pas peuvent avantageusement être constants.

De préférence, le rapport du plus grand sur le plus petit des premier et deuxième pas appartient à l'intervalle ] 1 ; 1,1 ].

Avantageusement, les premier et deuxième pas peuvent être compris entre 0,6 mm et 3 mm.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue de côté d'un mode de réalisation particulier d'implant dentaire selon l'invention, après une première étape de fabrication ;
[Fig.2] La figure 2 est une vue de côté du mode de réalisation particulier d'implant dentaire selon l'invention, après une deuxième étape de fabrication ;
[Fig.3] La figure 3 est une vue de côté du mode de réalisation particulier d'implant dentaire selon l'invention, en fin de fabrication ;
[Fig.4] La figure 4 est une vue partielle en coupe longitudinale de l'implant dentaire de la figure 3 ; et
[Fig.5] La figure 5 est un graphique illustrant le couple d'insertion de l'implant dentaire de la figure 3 et d'un implant dentaire non conforme à l'invention.

### DESCRIPTION DES MODES DE REALISATION PREFERES

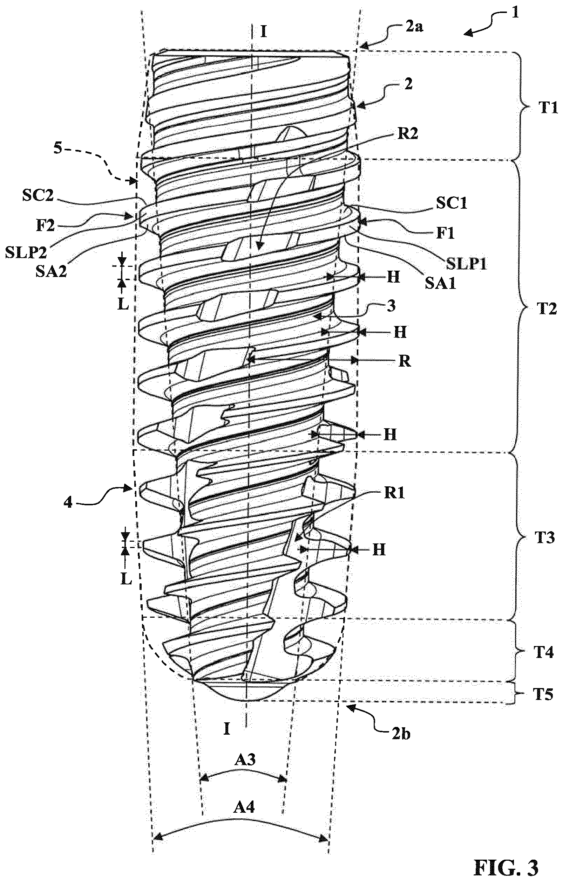

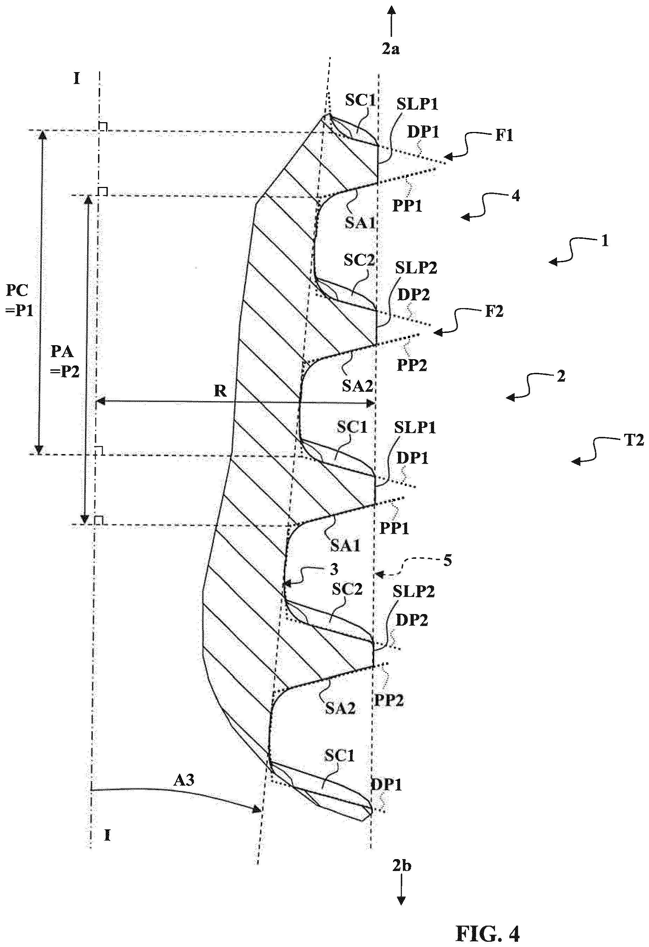

Sur les figures 3 et 4 est illustré un mode de réalisation particulier d'implant dentaire 1 selon l'invention.

L'implant dentaire 1 comprend un corps d'implant 2 s'étendant selon un axe longitudinal I-I entre une extrémité coronaire 2a et une extrémité apicale 2b, ledit corps d'implant 2 comportant une âme 3 le long de laquelle s'étend un filetage 4 hélicoïdal à au moins un filet. Ici, le filetage 4 comprend deux filets F1 et F2.

Les filets F1 et F2 comportent respectivement une surface apicale SA1 et SA2 orientées vers l'extrémité apicale 2b de l'implant dentaire 1, une surface coronaire SC1 et SC2 orientées vers l'extrémité coronaire 2a de l'implant dentaire 1. Une surface latérale périphérique SLP1 relie la surface apicale SA1 et la surface coronaire SC1. Une surface latérale périphérique SLP2 relie la surface apicale SA2 et la surface coronaire SC2.

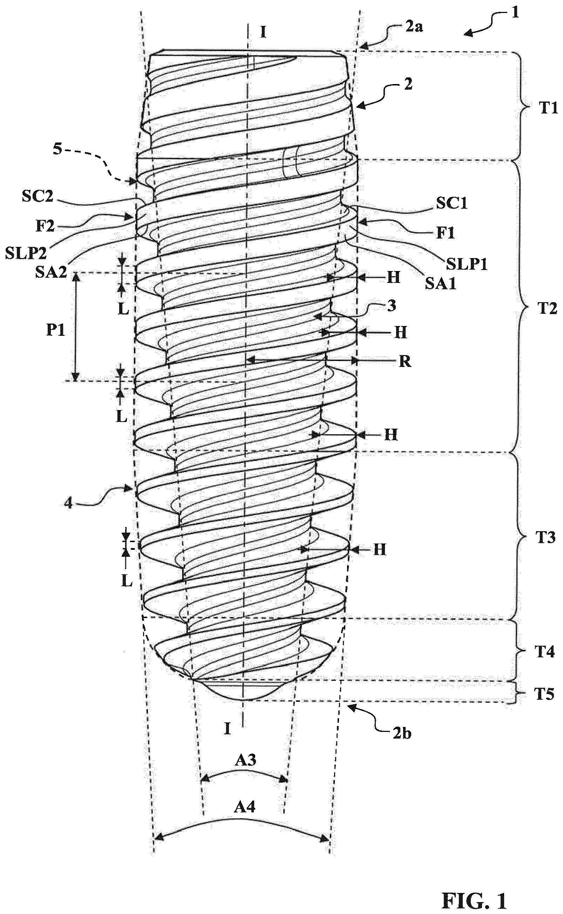

La forme extérieure du corps d'implant 2 et la forme extérieure de son âme 3 sont plus particulièrement mises en exergue sur les figures 1 à 4 au moyen de l'enveloppe externe 5 du corps d'implant 2 et de lignes en traits discontinus. On voit ainsi que le corps d'implant 2 comprend cinq tronçons T1 à T5 successifs depuis son extrémité coronaire 2a jusqu'à son extrémité apicale 2b.

Dans le tronçon T1, l'âme 3 est sensiblement cylindrique tandis que le filetage 4 est conique selon une conicité orientée vers l'extrémité coronaire 2a. La hauteur H (prise selon un plan sensiblement perpendiculaire à l'axe longitudinal I-I) des filets F1 et F2 diminue ainsi en direction de l'extrémité coronaire 2a. Cette diminution progressive de la section transversale de l'implant dentaire 1 en direction de son extrémité coronaire 2a permet de tenir compte du volume d'os qui s'amenuise au voisinage de la crête osseuse de l'os maxillaire ou mandibulaire selon la direction vestibulo-palatine. Cela permet une intégration esthétique de l'implant dentaire 1.

Dans le tronçon T2, l'âme 3 s'effile en direction de l'extrémité apicale 2b, en étant conique selon une conicité d'angle A3 orientée vers l'extrémité apicale 2b, tandis que le filetage 4 est sensiblement cylindrique avec un rayon R constant. La hauteur H (prise selon un plan sensiblement perpendiculaire à l'axe longitudinal I-I) des filets F1 et F2 augmente ainsi progressivement en direction de l'extrémité apicale 2b tandis que la largeur L (prise selon l'axe longitudinal) des surfaces latérales périphériques SLP1 et SLP2 des filets F1 et F2 augmente progressivement en direction de l'extrémité coronaire 2a.

Dans le tronçon T3, l'âme 3 est également conique. Sa conicité est la même que celle dans le tronçon T2. Le filetage 4 s'effile également en direction de l'extrémité apicale 2b, en étant conique selon une conicité orientée vers l'extrémité apicale 2b. La variation de la hauteur H du filetage 4 dépend de la relation entre les angles de cône respectifs A3 et A4 de l'âme 3 et du filetage 4 :
- lorsque l'angle de cône A3 de l'âme 3 est supérieur à l'angle de cône A4 du filetage 4, la hauteur H du filetage 4 augmente en direction de l'extrémité apicale 2b,
- lorsque l'angle de cône A3 de l'âme 3 est égal à l'angle de cône A4 du filetage 4, la hauteur H du filetage 4 est sensiblement constante en direction de l'extrémité apicale 2b,
- lorsque l'angle de cône A3 de l'âme 3 est inférieur à l'angle de cône A4 du filetage 4, la hauteur H du filetage 4 diminue en direction de l'extrémité apicale 2b.

Dans le mode de réalisation particulier illustré sur les figures, l'angle de cône A3 est supérieur à l'angle de cône A4, de sorte que la hauteur H du filetage 4 augmente en direction de l'extrémité apicale 2b.

Dans le tronçon T4, l'âme 3 est également conique. Sa conicité est la même que celle dans les tronçons T2 et T3. Le filetage 4 est quant à lui arrondi.

Le tronçon T5 est convexe, en forme de demi-lentille. Il est tout à fait optionnel.

L'âme 3 est ainsi effilée en direction de l'extrémité apicale 2b sur au moins un tronçon de la longueur de l'implant dentaire 1, en l'espèce sur les tronçons T2 à T4.

Dans le tronçon T2, le filetage 4 a une hauteur H (prise selon un axe radial perpendiculaire à l'axe longitudinal I-I) qui diminue progressivement en direction de l'extrémité coronaire 2a. L'âme y est effilée en direction de l'extrémité apicale 2b, et est plus particulièrement conique selon l'angle de cône A3. Tout cela est plus particulièrement visible sur la figure 4 qui est une vue de détail et en coupe longitudinale du tronçon T2 de l'implant dentaire 1 de la figure 3.

Sur cette figure 4, on constate que :
- les surfaces apicales SA1 et SA2 des filets F1 et F2 présentent, en coupe selon l'axe longitudinal I-I, un premier profil PP1 et PP2 se répétant selon un pas apical PA,
- les surfaces coronaires SC1 et SC2 des filets F1 et F2 présentent, en coupe selon l'axe longitudinal I-I, un deuxième profil DP1 et DP2 se répétant selon un pas coronaire PC,
- le pas apical PA est supérieur au pas coronaire PC.

Ici, les pas coronaire PC et apical PA sont constants. Le rapport du pas apical PA sur le pas coronaire PC appartient à l'intervalle ] 1 ; 1,1 ]. Dans l'exemple illustré sur la figure 4, le pas apical est de 2,03 mm tandis que le pas coronaire est de 2 mm. Le rapport du pas apical PA sur le pas coronaire PC est ainsi plus spécifiquement de 1,015.

En alternative, on peut prévoir que l'un du pas coronaire PC ou du pas apical PA est constant tandis que l'autre du pas coronaire PC ou du pas apical PA augmente progressivement.

On constate sur la figure 3 que, dans le tronçon T3, l'âme 3 est effilée (et plus particulièrement conique selon l'angle A3) en direction de l'extrémité apicale 2b, et le filetage 4 est également effilé en direction de l'extrémité apicale 2b, en étant conique selon un angle A4. Afin d'avoir, dans le tronçon T3, une hauteur H de filetage 4 (prise selon un axe radial perpendiculaire à l'axe longitudinal I-I) qui diminue progressivement en direction de l'extrémité coronaire 2a, l'âme 3 comporte une conicité supérieure à la conicité du filetage 4, c'est-à-dire qu'en pratique l'angle A3 est supérieur à l'angle A4. Dans le tronçon T3, les filets F1 et F2 ont les mêmes caractéristiques de pas coronaire PC et de pas apical PA, c'est-à-dire que le pas apical est supérieur au pas coronaire PC.

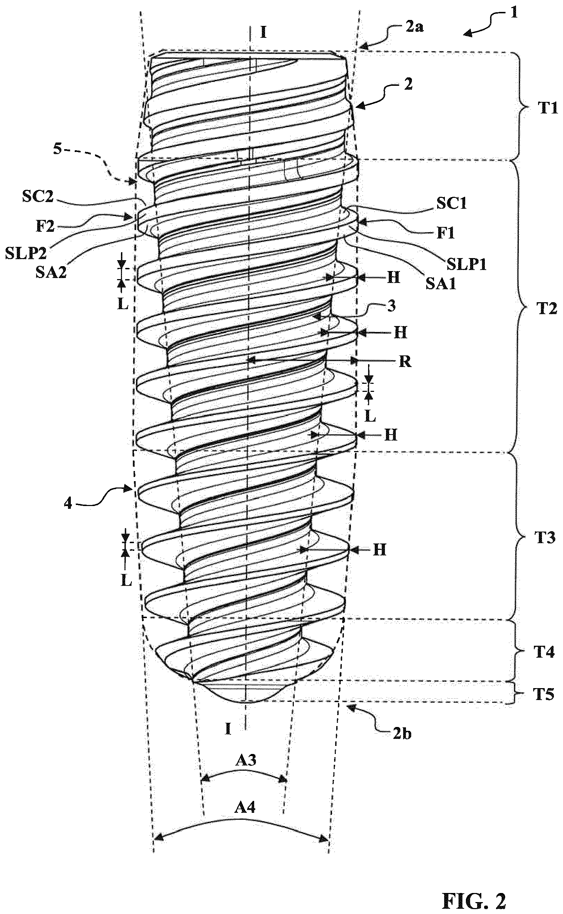

La fabrication de l'implant dentaire est plus particulièrement explicitée à l'aide des figures 1 et 2.

Sur la figure 1, on distingue le corps d'implant 2 façonné lors d'un premier cycle de filetage. Lors de ce premier cycle de filetage, on réalise les filets F1 et F2 par un outil à fileter en déplacement relatif longitudinal selon un premier pas P1, de telle sorte que :
- dans les tronçons T2 et T3 de longueur de l'implant dentaire 1, les filets F1 et F2 ont une hauteur H (prise selon un axe radial perpendiculaire à l'axe longitudinal I-I) diminuant progressivement en direction de l'extrémité coronaire 2a, et l'âme 3 est effilée en direction de l'extrémité apicale 2b,
- les filets F1 et F2 comportent respectivement des surfaces coronaires SC1 et SC2 orientée sensiblement en direction de l'extrémité coronaire 2a,
- les filets F1 et F2 comportent respectivement des surfaces apicales SA1 et SA2 orientée sensiblement en direction de l'extrémité apicale 2b,
- les filets F1 et F2 comportent respectivement des surfaces latérales périphériques SLP1 et SLP2 respectives, l'une reliant la surface apicale SA1 et la surface coronaire SC1, et l'autre reliant la surface apicale SA2 et la surface coronaire SC2.

On constate sur cette figure 1 que, dans les tronçons T2 et T3, la largeur L (prise dans un plan radial contenant l'axe longitudinal I-I) des surfaces latérales périphériques SLP1 et SLP2 augmente assez fortement en direction de l'extrémité coronaire 2a. Cela augmente fortement le couple d'insertion par vissage de l'implant dentaire 1 au fur et à mesure de l'insertion des tronçons T2 et T3 dans l'os.

Pour aboutir à l'implant dentaire 1 de la figure 2, lors d'un deuxième cycle de filetage, dans les tronçons T2 et T3 de longueur de l'implant dentaire 1, on retaille les surfaces apicales SA1 et SA2 et/ou les surfaces coronaires SC1 et SC2 des filets F1 et F2 par un outil à fileter en déplacement relatif longitudinal selon un deuxième pas P2 différent du premier pas P1.

De façon plus précise :
- lorsque le deuxième pas P2 est plus grand que le premier pas P1, on retaille les surfaces apicales SA1 et SA2. Le deuxième pas P2 est ainsi égal au pas apical PA, et est supérieur au premier pas P1 qui est le pas coronaire PC (défini par les surfaces coronaires SC1 et SC2 qui ne sont pas retaillées, cas illustré sur la figure 4) ;
- lorsque le deuxième pas P2 est plus petit que le premier pas P1, on retaille les surfaces coronaires SC1 et SC2. Le deuxième pas P2 est ainsi égal au pas coronaire PC, et est inférieur au premier pas P1 qui est le pas apical PA (défini par les surfaces apicales SA1 et SA2 qui ne sont pas retaillées).

Le deuxième cycle de filetage provoque une diminution de la largeur L (prise dans un plan radial contenant l'axe longitudinal I-I) des surfaces latérales périphériques SLP1 et SLP2, laquelle diminution augmente progressivement en direction de l'extrémité coronaire 2a. On peut ainsi atténuer au moins en partie l'augmentation de la largeur L (prise dans un plan radial contenant l'axe longitudinal I-I) des surfaces latérales périphériques SLP1 et SLP2 en direction de l'extrémité coronaire 2a que présente l'implant dentaire 1 obtenu à l'issue du premier cycle de filetage (figure 1).

On constate que sur la figure 2, dans les tronçons T2 et T3, la largeur L (prise selon l'axe longitudinal I-I) des surfaces latérales périphériques SLP1 et SLP2 augmente moins fortement en direction de l'extrémité coronaire 2a que sur la figure 1. Cela atténue nettement l'augmentation du couple d'insertion des tronçons T2 et T3 (et donc de l'implant dentaire 1) au fur et à mesure de leur pénétration dans l'os.

Après le deuxième cycle de filetage, on peut ménager dans le filetage 4 une pluralité de rainures de taraudage telles que les rainures R1 et R2 (figure 3) de façon à rendre l'implant dentaire 1 auto-taraudant.

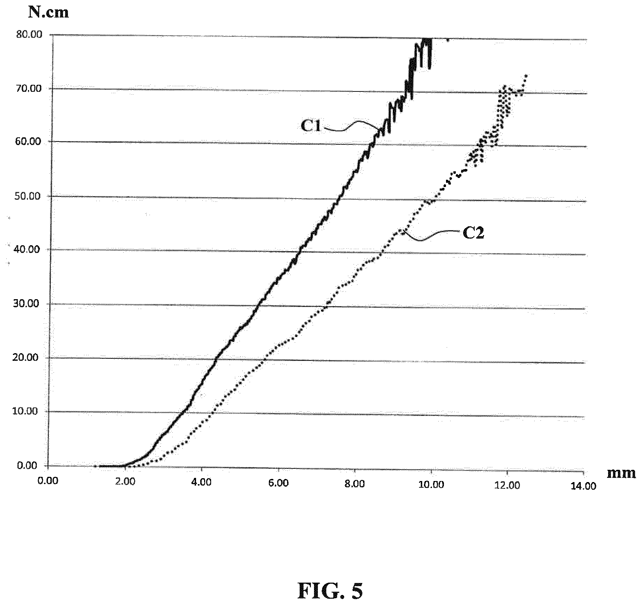

L'effet de l'invention en termes d'atténuation de l'augmentation du couple d'insertion par vissage est illustré sur le graphique de la figure 5, qui illustre le couple d'insertion (en N.cm) en fonction de l'enfoncement (en mm) par vissage de deux implants dentaires dans un bloc de test biomécanique en polyuréthane de densité 40 PCF (« pound per cubic foot » - livres par pied cubique) représentatif d'un os de forte densité.

La courbe C1 concerne un implant dentaire semblable à la figure 1 (mais muni en outre de trois rainures de taraudage semblables aux rainures de taraudage R1 et R2 de la figure 3), de diamètre extérieur maximal (dans le tronçon T2) de 4 mm et présentant une longueur totale de 12 mm. Celui-ci a été inséré par vissage dans un trou de diamètre intérieur de 3,6 mm.

La courbe C2 concerne un implant dentaire 1 selon l'invention tel qu'illustré sur la figure 3 (avec trois rainures de taraudage semblables aux rainures de taraudage R1 et R2 de la figure 3), de diamètre extérieur maximal (dans le tronçon T2) de 4 mm et présentant une longueur totale de 12 mm. Celui-ci a été inséré par vissage dans un trou de diamètre intérieur de 3,6 mm.

On observe que le couple d'insertion illustré par la courbe C1 augmente rapidement pour atteindre 80 N.cm pour une course d'enfoncement très légèrement inférieure à 10 mm. Le vissage a alors été interrompu à 80 N.cm afin de ne pas endommager la connectique interne de l'implant dentaire permettant son entraînement en rotation pour le visser. Cela signifie en pratique que l'insertion de l'implant dentaire a échoué : il n'a pas été possible de le faire dans le bloc selon toute sa longueur de 12 mm.

On observe que le couple d'insertion de l'implant dentaire 1 selon l'invention, illustré par la courbe C2, augmente moins vite. Pour un enfoncement d'environ 10 mm, le couple d'insertion est d'environ 50 N.cm, ce qui est très nettement inférieur aux 80 N.cm de l'implant dépourvu de la présente invention. Et on parvient à insérer l'implant dentaire 1 selon la totalité de sa longueur de 12 mm sans dépasser un couple d'insertion de 70 N.cm, lequel n'est pas susceptible d'endommager la connectique interne de l'implant dentaire 1 permettant son entraînement en rotation pour le visser.

La courbe C2 présente une pente moindre que la courbe C1 : grâce à l'invention, l'augmentation du couple d'insertion par vissage est bien atténuée.

La présente invention n'est pas limitée aux modes de réalisation qui ont été explicitement décrits, mais elle en inclut les diverses variantes et généralisations contenues dans le domaine des revendications ci-après.

## Revendications

1. Implant dentaire (1) comprenant un corps d'implant (2) s'étendant selon un axe longitudinal (I-I) entre une extrémité coronaire (2a) et une extrémité apicale (2b), ledit corps d'implant (2) comportant une âme (3) le long de laquelle s'étend un filetage (4) hélicoïdal à au moins un filet (F1, F2), ledit implant dentaire (1) comportant au moins un tronçon (T2, T3) dans lequel le filetage (4) a une hauteur (H) qui diminue progressivement en direction de l'extrémité coronaire (2a) et dans lequel l'âme (3) est effilée en direction de l'extrémité apicale (2b), ledit au moins un filet (F1, F2) comportant une surface apicale (SA1, SA2) orientée vers l'extrémité apicale (2b) de l'implant dentaire, une surface coronaire (SC1, SC2) orientée vers l'extrémité coronaire (2a) de l'implant dentaire (1) et une surface latérale périphérique (SLP1, SLP2) reliant la surface apicale (SA1, SA2) et la surface coronaire (SC1, SC2) dudit au moins un filet (F1, F2), dans lequel :
- la surface apicale (SA1, SA2) dudit au moins un filet (F1, F2) présente, en coupe selon l'axe longitudinal (I-I), un premier profil (PP1, PP2) se répétant selon un pas apical (PA),
- la surface coronaire (SC1, SC2) dudit au moins un filet (F1, F2) présente, en coupe selon l'axe longitudinal (I-I), un deuxième profil (DP1, DP2) se répétant selon un pas coronaire (PC),
**caractérisé en ce que**, dans ledit au moins un tronçon (T2, T3), le pas apical (PA) est supérieur au pas coronaire (PC).

2. Implant dentaire (1) selon la revendication 1, **caractérisé en ce que** les pas coronaire (PC) et apical (PA) sont constants.

3. Implant dentaire (1) selon la revendication 2, **caractérisé en ce que** le rapport du pas apical (PA) et du pas coronaire (PC) appartient à l'intervalle ] 1 ; 1,1 ].

4. Implant dentaire (1) selon la revendication 1, **caractérisé en ce que** l'un du pas coronaire (PC) ou du pas apical (PA) est constant tandis que l'autre du pas coronaire (PC) ou du pas apical (PA) augmente progressivement.

5. Implant dentaire (1) selon l'une quelconque des revendications 1 à 4, **caractérisé en ce que** l'âme (3) est effilée de façon conique en direction de l'extrémité apicale (2b) sur ledit au moins un tronçon (T2, T3) de l'implant dentaire (1).

6. Implant dentaire (1) selon la revendication 5, **caractérisé en ce que**, dans ledit au moins un tronçon (T2, T3) de l'implant dentaire (1) dans lequel l'âme (3) est effilée en direction de l'extrémité apicale (2b), le filetage (4) est effilé en direction de l'extrémité apicale (2b), en étant de préférence conique.

7. Implant dentaire (1) selon la revendication 6, **caractérisé en ce que**, dans ledit au moins un tronçon (T2, T3) de l'implant dentaire (1) :
- l'âme (3) et le filetage (4) sont coniques,
- l'âme (3) comporte une conicité (A3) supérieure à la conicité (A4) du filetage (4).

8. Procédé de fabrication d'un implant dentaire (1) comprenant un corps d'implant (2) s'étendant selon un axe longitudinal (I-I) entre une extrémité coronaire (2a) et une extrémité apicale (2b), ledit corps d'implant (2) comportant une âme (3) le long de laquelle s'étend un filetage (4) hélicoïdal à au moins un filet (F1, F2), **caractérisé en ce que** :
a) lors d'un premier cycle de filetage, on réalise au moins un filet (F1, F2) par un outil à fileter en déplacement relatif longitudinal selon un premier pas (P1), de telle sorte que :
- dans au moins un tronçon (T2, T3) de l'implant dentaire (1), ledit au moins un filet (F1, F2) a une hauteur (H) diminuant progressivement en direction de l'extrémité coronaire (2a) et l'âme (3) est effilée en direction de l'extrémité apicale (2b),
- ledit au moins un filet (F1, F2) comporte une surface coronaire (SC1, SC2) orientée sensiblement en direction de l'extrémité coronaire (2a),
- ledit au moins un filet (F1, F2) comporte une surface apicale (SA1, SA2) orientée sensiblement en direction de l'extrémité apicale (2b),
- ledit au moins un filet (F1, F2) comporte une surface latérale périphérique (SLP1, SLP2) reliant la surface apicale (SA1, SA2) et la surface coronaire (SC1, SC2),
b) lors d'un deuxième cycle de filetage, dans ledit au moins un tronçon (T2, T3) de longueur de l'implant dentaire (1), on retaille par un outil à fileter en déplacement relatif longitudinal selon un deuxième pas (P2) :
- la surface apicale (SA1, SA2), le deuxième pas (P2) étant plus grand que le premier pas (P1), et/ou
- la surface coronaire (SC1, SC2), le deuxième pas (P2) étant plus petit que le premier pas (P1).

9. Procédé de fabrication selon la revendication 8, **caractérisé en ce que** les premier (P1) et deuxième (P2) pas sont constants.

10. Procédé de fabrication selon la revendication 9, **caractérisé en ce que** le rapport du plus grand sur le plus petit des premier (P1) et deuxième pas (P2) appartient à l'intervalle ] 1 ; 1,1 ].

11. Procédé de fabrication selon l'une quelconque des revendications 8 à 10, **caractérisé en ce que** les premier (P1) et deuxième (P2) pas sont compris entre 0,6 mm et 3 mm.

## Patentansprüche

1. Zahnimplantat (1), aufweisend einen Implantatkörper (2), der sich entlang einer Längsachse (I-I) zwischen einem koronalen Ende (2a) und einem apikalen Ende (2b) erstreckt, welcher Implantatkörper (2) einen Kern (3) umfasst, entlang dessen sich ein schraubenförmiges Gewinde (4) erstreckt, das mindestens einen Gewindegang (F1, F2) aufweist, welches Zahnimplantat (1) mindestens einen Abschnitt (T2, T3) aufweist, innerhalb dessen das Gewinde (4) eine Höhe (H) besitzt, die in Richtung des koronalen Endes (2a) progressiv abnimmt und innerhalb dessen sich der Kern (3) in Richtung des apikalen Endes (2b) hin verjüngt, wobei der mindestens eine Gewindegang (F1, F2) eine in Richtung des apikalen Endes (2b) des Zahnimplantats (1) gerichtete apikale Oberfläche (SA1, SA2), eine in Richtung des koronalen Endes (2a) gerichtete koronale Oberfläche (SC1, SC2) und eine seitliche, entlang des Umfangs verlaufende Oberfläche (SLP1, SLP2) umfasst, die die apikale Oberfläche (SA1, SA2) und die koronale Oberfläche (SC1, SC2) des mindestens einen Gewindegangs (F1, F2) verbindet, wobei:
- die apikale Oberfläche (SA1, SA2) des mindestens einen Gewindegangs (F1, F2) in einem Schnitt entlang der Längsachse (I-I) ein erstes Profil (PP1, PP2) aufweist, das sich im Abstand einer apikalen Steigung (PA) wiederholt,
- die koronale Oberfläche (SC1, SC2) des mindestens einen Gewindegangs (F1, F2) in einem Schnitt entlang der Längsachse (I-I) ein zweites Profil (DP1, DP2) aufweist, das sich im Abstand einer koronalen Steigung (PC) wiederholt,
**dadurch gekennzeichnet, dass** in dem mindestens einen Abschnitt (T2, T3) die apikale Steigung (PA) größer ist als die koronale Steigung (PC).

2. Zahnimplantat (1) nach Anspruch 1, **dadurch gekennzeichnet, dass** die koronale Steigung (PC) und die apikale Steigung (PA) konstant sind.

3. Zahnimplantat (1) nach Anspruch 2, **dadurch gekennzeichnet, dass** das Verhältnis der apikalen Steigung (PA) und der koronalen Steigung (PC) in einem Bereich zwischen ]1 und 1,1] liegt.

4. Zahnimplantat (1) nach Anspruch 1, **dadurch gekennzeichnet, dass** eine, entweder die koronale Steigung (PC) oder die apikale Steigung (PA) konstant ist, wohingegen die andere, entweder die koronale Steigung (PC) oder die apikale Steigung (PA) progressiv zunimmt.

5. Zahnimplantat (1) nach einem der Ansprüche 1 bis 4, **dadurch gekennzeichnet, dass** sich der Kern (3) innerhalb des mindestens einen Abschnitts (T2, T3) des Zahnimplantats (1) konisch in Richtung des apikalen Endes (2b) hin verjüngt.

6. Zahnimplantat (1) nach Anspruch 5, **dadurch gekennzeichnet, dass** sich innerhalb des mindestens einen Abschnitts (T2, T3) des Zahnimplantats (1), innerhalb dessen sich der Kern (3) in Richtung des apikalen Endes (2b) hin verjüngt, das Gewinde (4), vorzugsweise konisch, in Richtung des apikalen Endes (2b) hin verjüngt.

7. Zahnimplantat (1) nach Anspruch 6, **dadurch gekennzeichnet, dass** innerhalb des mindestens einen Abschnitts (T2, T3) des Zahnimplantats (1):
- der Kern (3) und das Gewinde (4) konisch sind,
- der Kern (3) eine höhere Konizität (A3) aufweist als die Konizität (A4) des Gewindes (4).

8. Verfahren zur Herstellung eines Zahnimplantats (1), aufweisend einen Implantatkörper (2), der sich entlang einer Längsachse (I-I) zwischen einem koronalen Ende (2a) und einem apikalen Ende (2b) erstreckt, welcher Implantatkörper (2) einen Kern (3) umfasst, entlang dessen sich ein schraubenförmiges Gewinde (4) erstreckt, das mindestens einen Gewindegang (F1, F2) aufweist, **dadurch gekennzeichnet, dass**
a) in einem ersten Gewindedrehzyklus mindestens ein Gewindegang (F1, F2) durch ein Gewindeschneidwerkzeug in relativer Längsverschiebung entlang einer ersten Steigung (P1) in der Art realisiert wird, dass:
- innerhalb des mindestens einen Abschnitts (T2, T3) des Zahnimplantats (1) der mindestens eine Gewindegang (F1, F2) eine in Richtung des koronalen Endes (2a) progressiv abnehmende Höhe (H) aufweist und sich der Kern (3) in Richtung des apikalen Endes (2b) hin verjüngt,
- der mindestens eine Gewindegang (F1, F2) eine koronale Oberfläche (SC1, SC2) umfasst, die im Wesentlichen in Richtung des koronalen Endes (2a) gerichtet ist,
- der mindestens eine Gewindegang (F1, F2) eine apikale Oberfläche (SA1, SA2) umfasst, die im Wesentlichen in Richtung des apikalen Endes (2b) gerichtet ist,
- der mindestens eine Gewindegang (F1, F2) eine seitliche, entlang des Umfangs verlaufende Oberfläche (SLP1, SLP2) umfasst, die die apikale Oberfläche (SA1, SA2) und die koronale Oberfläche (SC1, SC2) verbindet,
b) in einem zweiten Gewindedrehzyklus innerhalb des mindestens einen Abschnitts (T2, T3) der Länge des Zahnimplantats (1) durch ein Gewindeschneidwerkzeug in relativer Längsverschiebung entlang einer zweiten Steigung (P2) geschnitten wird:
- die apikale Oberfläche (SA1, SA2), die zweite Steigung (P2) sind größer als die erste Steigung (P1), und/oder
- die koronale Oberfläche (SC1, SC2), die zweite Steigung (P2) sind kleiner als die erste Steigung (P1).

9. Herstellungsverfahren nach Anspruch 8, **dadurch gekennzeichnet, dass** die erste Steigung (P1) und die zweite Steigung (P2) konstant sind.

10. Herstellungsverfahren nach Anspruch 9, **dadurch gekennzeichnet, dass** das Verhältnis von der höchsten zu der geringsten der ersten Steigung (P1) und der zweiten Steigung (P2) in einem Bereich zwischen ]1 und 1,1] liegt.

11. Herstellungsverfahren nach einem der Ansprüche 8 bis 10, **dadurch gekennzeichnet, dass** die erste Steigung (P1) und die zweite Steigung (P2) in einem Größenbereich zwischen 0,6 mm und 3 mm liegen.

## Claims

1. Dental implant (1) comprising an implant body (2) extending along a longitudinal axis (I-I) between a coronal end (2a) and an apical end (2b), said implant body (2) having a core (3), along which there extends a helical threading (4) having at least one thread (F1, F2), said dental implant (1) having at least one segment (T2, T3) in which the threading (4) has a height (H) which decreases progressively in the direction of the coronal end (2a) and in which the core (3) is tapered in the direction of the apical end (2b), said at least one thread (F1, F2) having an apical surface (SA1, SA2) oriented towards the apical end (2b) of the dental implant, a coronal surface (SC1, SC2) oriented towards the coronal end (2a) of the dental implant (1), and a peripheral lateral surface (SLP1, SLP2) connecting the apical surface (SA1, SA2) and the coronal surface (SC1, SC2) of said at least one thread (F1, F2), in which:
- the apical surface (SA1, SA2) of said at least one thread (F1, F2) has, in section along the longitudinal axis (I-I), a first profile (PP1, PP2) which repeats according to an apical pitch (PA),
- the coronal surface (SC1, SC2) of said at least one thread (F1, F2) has, in section along the longitudinal axis (I-I), a second profile (DP1, DP2) which repeats according to a coronal pitch (PC),
**characterized in that**, in said at least one segment (T2, T3), the apical pitch (PA) is greater than the coronal pitch (PC).

2. Dental implant (1) according to Claim 1, **characterized in that** the coronal pitch (PC) and apical pitch (PA) are constant.

3. Dental implant (1) according to Claim 2, **characterized in that** the ratio of the apical pitch (PA) and the coronal pitch (PC) belongs to the interval 1:1.1.

4. Dental implant (1) according to Claim 1, **characterized in that** one of the coronal pitch (PC) and apical pitch (PA) is constant, while the other of the coronal pitch (PC) and apical pitch (PA) increases progressively.

5. Dental implant (1) according to any one of Claims 1 to 4, **characterized in that** the core (3) is tapered conically in the direction of the apical end (2b) on said at least one segment (T2, T3) of the dental implant (1).

6. Dental implant (1) according to Claim 5, **characterized in that**, in said at least one segment (T2, T3) of the dental implant (1) in which the core (3) is tapered in the direction of the apical end (2b), the threading (4) is tapered in the direction of the apical end (2b), being preferably conical.

7. Dental implant (1) according to Claim 6, **characterized in that**, in said at least one segment (T2, T3) of the dental implant (1):
- the core (3) and the threading (4) are conical,
- the core (3) has a taper (A3) greater than the taper (A4) of the threading (4).

8. Method for manufacturing a dental implant (1) comprising an implant body (2) extending along a longitudinal axis (I-I) between a coronal end (2a) and an apical end (2b), said implant body (2) having a core (3), along which there extends a helical threading (4) having at least one thread (F1, F2), **characterized in that**:
a) during a first threading cycle, at least one thread (F1, F2) is formed by a threading tool in longitudinal relative movement according to a first pitch (P1), such that:
- in at least one segment (T2, T3) of the dental implant (1), said at least one thread (F1, F2) has a height (H) which decreases progressively in the direction of the coronal end (2a), and the core (3) is tapered in the direction of the apical end (2b),
- said at least one thread (F1, F2) has a coronal surface (SC1, SC2) oriented substantially in the direction of the coronal end (2a),
- said at least one thread (F1, F2) has an apical surface (SA1, SA2) oriented substantially in the direction of the apical end (2b),
- said at least one thread (F1, F2) has a peripheral lateral surface (SLP1, SLP2) connecting the apical surface (SA1, SA2) and the coronal surface (SC1, SC2),
b) during a second threading cycle, in said at least one length segment (T2, T3) of the dental implant (1), a threading tool in longitudinal relative movement according to a second pitch (P2) is used to recut:
- the apical surface (SA1, SA2), the second pitch (P2) being greater than the first pitch (P1), and/or
- the coronal surface (SC1, SC2), the second pitch (P2) being smaller than the first pitch (P1).

9. Manufacturing method according to Claim 8, **characterized in that** the first pitch (P1) and second pitch (P2) are constant.

10. Manufacturing method according to Claim 9, **characterized in that** the ratio of the largest to the smallest of the first pitch (P1) and second pitch (P2) belongs to the interval 1:1.1.

11. Manufacturing method according to any one of Claims 8 to 10, **characterized in that** the first pitch (P1) and second pitch (P2) are between 0.6 mm and 3 mm.
